# EUROPÄISCHE PATENTSCHRIFT

(11) **EP 3 114 346 B1**
(45) Veröffentlichungstag und Bekanntmachung des Hinweises auf die Patenterteilung: **28.06.2023**
(21) Anmeldenummer: 15705985.8
(22) Anmeldetag: 19.02.2015
(51) Int. Cl.: F02M 57/00

(54) **VERFAHREN ZUR REGELUNG EINES COMMON-RAIL-INJEKTORS**
METHOD FOR REGULATING A COMMON-RAIL INJECTOR
PROCÉDÉ DE RÉGULATION D'UN INJECTEUR À RAMPE COMMUNE

(30) Priorität: 06.03.2014 DE 102014204098
(43) Veröffentlichungstag der Anmeldung: 11.01.2017
(73) Patentinhaber: Robert Bosch GmbH, 70442 Stuttgart (DE)
(72) Erfinder: KOBER, Ralph, 71701 Schwieberdingen (DE); RAPP, Holger, 71254 Ditzingen (DE); FISCHER, Fabian, 70176 Stuttgart (DE); BEIER, Marco, 71229 Leonberg (DE); STEIN, Stefan, 70563 Stuttgart (DE)
(86) Internationale Anmeldenummer: PCT/EP2015/053463
(87) Internationale Veröffentlichungsnummer: WO 2015/132074

(56) Entgegenhaltungen:
- EP-A2- 1 321 660
- EP-A2- 2 031 226
- WO-A1-2012/128741
- WO-A1-2013/014736
- DE-A1- 10 252 476
- DE-A1-102009 029 549
- DE-A1-102011 078 159
- DE-A1-102011 078 947
- US-A1- 2012 325 936

## Beschreibung

Die vorliegende Erfindung betrifft ein Verfahren zur Regelung eines Common-Rail-Injektors. Weiterhin betrifft die vorliegende Erfindung ein Computerprogramm, welches eingerichtet ist, jeden Schritt des erfindungsgemäßen Verfahrens durchzuführen und ein maschinenlesbares Speichermedium, auf welchem das erfindungsgemäße Computerprogramm gespeichert ist. Schließlich betrifft die vorliegende Erfindung ein elektronisches Steuergerät, welches das erfindungsgemäße maschinenlesbare Speichermedium umfasst.

### Stand der Technik

Hochdruckeinspritzsysteme vom Common-Rail-Typ umfassen eine Pumpe, die ausgebildet ist, um Kraftstoffflüssigkeit in einem speziell bereitgestellten Hochdrucksammler (Common-Rail), der die Einspritzvorrichtungen speist, unter Druck zu setzen. Die Einspritzvorrichtung, die als Common-Rail-Injektor bezeichnet wird, weist eine Einspritzöffnung mit einem Nadelventil auf, das sich in dem Injektionskörper zwischen einer geschlossenen Position und einer offenen Position bewegen kann. Die Position der Ventilnadel wird durch die Intensität zweier Kräfte bestimmt, die durch Wirkung von Flüssigkeit unter Druck an entsprechenden Wirkflächen erzeugt werden und welche in entgegengesetzten Richtungen wirken. Der unter Druck gesetzte Kraftstoff in der Kammer stromauf eines Dichtabschnitts der Ventilnadel wirkt in die Heberichtung der Ventilnadel von Ihrem Sitz und daher in die Öffnungsrichtung. Ein elektronisch gesteuertes Steuerventil modelliert den Druck in einer Steuerkammer, die auf eine Oberfläche wirkt, um eine Kraft zu erzeugen, welche im Ruhezustand größer ist als die erste Kraft und wirkt in Schließrichtung der Ventilnadel. Die Aktivierung des Ventils verursacht eine Verringerung des Druckniveaus in der Steuerkammer bis zu einem Punkt, an dem die Kraft, die durch das Treibstofffluid erzeugt wird, und welche wirkt, um eine Öffnung zu veranlassen, über die erste Kraft überwiegt und ein Steigen der Ventilnadel verursacht. Dies führt zu einer Kraftstoffeinspritzung.

Aufgrund von Bauteiltoleranzen und Verschleiß kommt es bei Common-Rail-Injektoren zu Injektor- und Laufzeit-abhängigen Ausprägungen des Einspritzverhaltens. Diese müssen kompensiert werden, um stets das gleiche Einspritzverhalten zu erzielen. Unterschiedliche Kraftstoffeigenschaften, insbesondere die Kraftstoffart und die Kraftstofftemperatur beeinflussen darüber hinaus ebenfalls das Injektorverhalten. Eine gute Kompensation dieser Effekte setzt die genaue Kenntnis verschiedener Injektoreigenschaften voraus. Dokumente EP1321660 A2 und US2012/0325936 A1 offenbaren eine Regelung eines Common-Rail-Injektors mithilfe eines Drucksensors.

### Offenbarung der Erfindung

Das erfindungsgemäße Verfahren zur Regelung eines Common-Rail-Injektors umfasst das Erfassen eines Signals eines Sensors, das proportional zu einem Druck in einem Ventilraum des Common-Rail-Injektors ist. Weiterhin umfasst es das Auswerten einer Änderung des Signals mit der Zeit, um mindestens ein Betriebsereignis des Common-Rail-Injektors zu erkennen. Schließlich umfasst es das Ändern mindestens einer Betriebsgröße des Common-Rail-Injektors in Abhängigkeit von dem mindestens einen Betriebsereignis, wobei die mindestens eine Betriebsgröße ausgewählt ist aus einer Öffnungsdauer, einer Schließdauer, einem Öffnungszeitpunkt und einem Schließzeitpunkt eines Schaltventils des Common-Rail-Injektors sowie aus einer Öffnungsdauer, aus einem Öffnungszeitpunkt und aus einem Schließzeitpunkt eines Nadelventils des Common-Rail-Injektors. Diese Regelstrategie ermöglicht eine gute Kompensation von Effekten, welche Betriebsereignisse des Common-Rail-Injektors auf sein Einspritzverhalten ausüben.

Der Sensor ist insbesondere ein im Niederdruckbereich des Common-Rail-Injektors angeordnetes Piezoelement. Bei dem Signal kann es sich in diesem Fall um eine an dem Piezoelement anliegende Spannung handeln. Wenn das Piezoelement über einen niederohmigen Widerstand angeschlossen ist, so kann anstelle der Spannung der vom Piezoelement abgegebene Strom als Signal verwendet werden.

Der zeitliche Verlauf des Signals kann mit Schwingungen überlagert sein, die eine Auswertung der Änderung des Signals mit der Zeit erschweren. Deshalb ist es bevorzugt, dass eine dem Signal überlagerte Schwingung vor dem Auswerten der Änderung des Signals gefiltert wird.

Als das mindestens eine Betriebsereignis wird im erfindungsgemäßen Verfahren vorzugsweise ein Betriebsereignis ausgewählt, welches einfach aus der zeitlichen Änderung des Signals erkannt werden kann und welches eine gute Grundlage zum Ändern einer Betriebsgröße des Common-Rail-Injektors in der Regelstrategie darstellt. Deshalb ist es bevorzugt, dass das mindestens eine Betriebsereignis ausgewählt ist aus der Gruppe, bestehend aus einem Beginn eines Öffnens des Schaltventils, einer Kraftüberhöhung beim Beginn des Öffnens des Schaltventils, einem Ende des Öffnens des Schaltventils, einem Druckverlust im Ventilraum bei geöffnetem Schaltventil, einem Kavitationsrauschen bei geöffnetem Schaltventil, einem Beginn eines Schließens des Schaltventils, einem Ende des Schließens des Schaltventils, einer Nadelumkehr des Nadelventils, einem Drucküberschwinger im Ventilraum bei der Nadelumkehr, einem Ventilprellen des Nadelventils, einer Änderung des Drucks im Ventilraum während beim Schließen der Ventilnadel des Nadelventils, einer Änderung des Drucks im Ventilraum zwischen den Zuständen geöffnetes und geschlossenes Schaltventil bei geöffneter Ventilnadel des Nadelventils und einem Nadelschließen des Nadelventils. Es ist bevorzugt, dass durch die Auswertung des Signals weiterhin mindestens eine Eigenschaft des Common-Rail-Injektors ermittelt wird. Die Kenntnis einer solchen Injektoreigenschaft ermöglicht eine gute Kompensation injektorabhängiger Ausprägungen der Einspritzeigenschaften.

Besonders bevorzugt ist die mindestens eine Eigenschaft des Common-Rail-Injektors ausgewählt aus einem Grad seiner Verkokung, einem Zeitpunkt einer Entdrosselung seines Schaltventils, einem Grad eines Prellens seines Schaltventils und einem Grad eines Verschleißes seines Schaltventils. Diese Eigenschaften lassen sich einfach aus der zeitlichen Änderung des Signals ermitteln.

Erfindungsgemäss, wird durch die Auswertung des Signals mindestens eine Eigenschaft eines Kraftstoffs ermittelt welcher mittels des Common-Rail-Injektors eingespritzt wird. Kraftstoffeigenschaften beeinflussen das Injektorverhalten, so dass ihre Kenntnis vorteilhaft ist, um stets dasselbe Einspritzverhalten des Common-Rail-Injektors zu erzielen.

Erfindungsgemäss, handelt es sich bei der mindestens einen Eigenschaft des Kraftstoffs um seine Viskosität. Die Kraftstoffviskosität ist von der Kraftstoffart und Kraftstofftemperatur abhängig, so dass sie Änderungen unterliegt. Zudem hat sie einen großen Einfluss auf das Injektorverhalten.

Das erfindungsgemäße Computerprogramm ist eingerichtet, jeden Schritt des erfindungsgemäßen Verfahrens durchzuführen, insbesondere dann, wenn es auf einem elektronischen Steuergerät durchgeführt wird. Vorzugsweise ist es auf einem maschinenlesbaren Speichermedium gespeichert. Das erfindungsgemäße Computerprogramm ermöglicht die einfache Implementierung des erfindungsgemäßen Verfahrens in einem vorhandenen Steuergerät, ohne daran bauliche Veränderungen vornehmen zu müssen. Durch Aufspielen des erfindungsgemäßen Computerprogramms auf ein herkömmliches Steuergerät wird das erfindungsgemäße elektronische Steuergerät erhalten, welches ein maschinenlesbares Speichermedium umfasst, dass das erfindungsgemäße Computerprogramm speichert.

### Kurze Beschreibung der Zeichnungen

Ein Ausführungsbeispiel der Erfindung ist in den Zeichnungen dargestellt und in der nachfolgenden Beschreibung näher erläutert.
- Fig. 1: ist eine Querschnittsdarstellung eines Common-Rail-Injektors, welcher mittels eines Verfahrens gemäß einem Ausführungsbeispiel der Erfindung geregelt werden kann.
- Fig. 2: zeigt einen Detailausschnitt aus dem Common-Rail-Injektor gemäß Fig. 1.
- Fig. 3: zeigt in einem Diagramm den zeitlichen Verlauf eines Signals, welches in einem Verfahren gemäß einer Ausführungsform der Erfindung ausgewertet wird.
- Fig. 4: zeigt in fünf Diagrammen den Zusammenhang zwischen dem zeitlichen Verlauf des Signals gemäß Fig. 3 und dem zeitlichen Verlauf von Strom, Ankerhub, Steuerraumdruck und Nadelhub.

### Ausführungsbeispiele der Erfindung

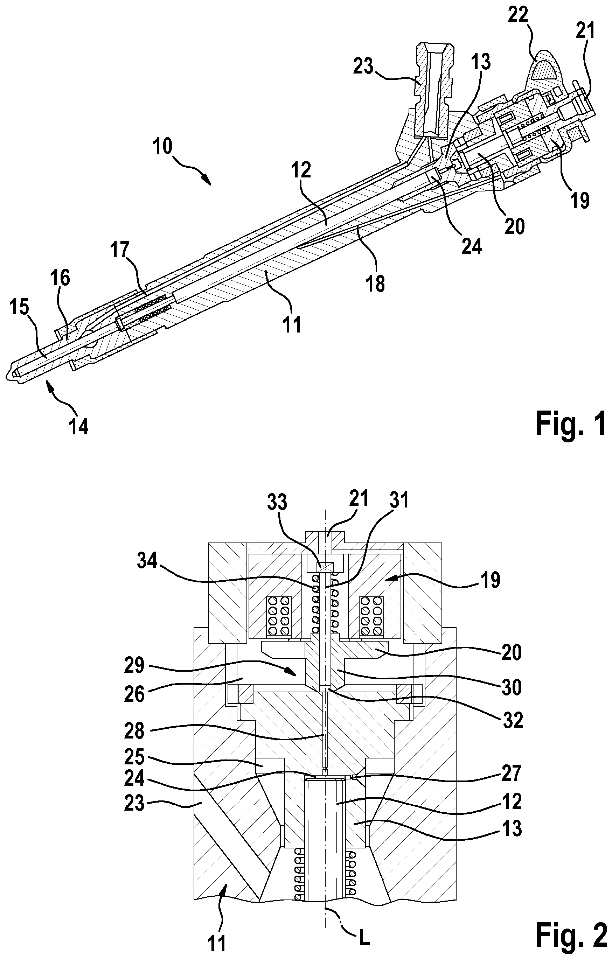

Ein Ausführungsbeispiel der Erfindung wird anhand der Regelung eines Common-Rail-Injektors 10 beschrieben, der aus der DE 10 2009 029 549 A1 bekannt ist und in Fig. 1 dargestellt ist. Dieser Common-Rail-Injektor 10 umfasst einen Injektorkörper 11, in dem ein Ventilkolben 12 angeordnet ist. Dieser ist an einem oberen Ende in einem Ventilstück 13 geführt. Sein unteres Ende erstreckt sich in Richtung einer Düse 14. Der Ventilkolben 12 ist mit der Ventilnadel 15 eines Nadelventils 16 verbunden, die innerhalb der Düse 14 angeordnet ist. Außerdem ist der Ventilkolben 12 mit einer Hochdruckbohrung 17 und mit einer Rücklaufbohrung 18 verbunden. An einem oberen Ende des Common-Rail-Injektors 10 sind ein Magnetkopf 19, eine Ankergruppe 20 und ein Rücklauf 21 angeordnet. Der Common-Rail-Injektor 10 ist weiterhin über einen elektrischen Anschluss 22 mit einer elektrischen Energiequelle (nicht gezeigt) und über einen Hochdruckanschluss 23, der einen Stabfilter umfasst, mit einer Kraftstoffzuleitung (nicht gezeigt) verbunden.

Beim Betrieb des Common-Rail-Injektors 10 ist vorgesehen, dass der Magnetkopf 19 bestromt wird, wodurch die Ankergruppe 20 zum Magnetkopf hin bewegt wird. Dadurch öffnet sich die Verbindung zwischen einem Steuerraum 24 oberhalb des Ventilkolbens 12 und dem Rücklauf 21. Dies löst ein Absinken des Drucks im Steuerraum 24 und damit eine Öffnungsbewegung des Verbunds aus Ventilkolben 12 und Ventilnadel 15 aus. Durch das Öffnen des Nadelventils 16 wird die Verbindung zwischen der Hochdruckbohrung 17 und den Spritzlöchern der Düse 14 hergestellt, wodurch Kraftstoff zur Düse 14 gefördert und in einen Zylinder eines Verbrennungsmotors eingespritzt wird.

Gemäß Fig. 2 ist innerhalb des Injektorkörpers 11 ein Hochdruckraum 25 sowie ein Niederdruckraum 26 angeordnet. Diese beiden Räume sind voneinander durch das Ventilstück 13 getrennt. Der Hochdruckraum 25 kommuniziert mit dem Hochdruckanschluss 23. Der Niederdruckraum 26 ist über den Rücklauf 21 mit einem Kraftstofftank verbunden. Der Hochdruckraum 25 ist Mit der Düse 14 verbunden. Das düsenferne Ende des Ventilkolbens 12 ist verdrängerwirksam in dem im Ventilstück 13 angeordneten Steuerraum 24 angeordnet. Der Steuerraum 24 kommuniziert über eine Zulaufdrossel 27 mit dem Hochdruckraum 25 und über einen gedrosselten Ablaufkanal 28 mit dem Niederdruckraum 26, wobei der Ablaufkanal 28 mittels eines Schaltventils 29 gesteuert wird. Wenn der Ablaufkanal 28 mittels des Schaltventils 29 abgesperrt wird und die Ventilnadel 15 sich in ihrer Schließlage befindet, stellt sich im Steuerraum 24 der gleiche Hochdruck wie im Hochdruckraum 25 ein, mit der Folge, dass der Ventilkolben 12 nach abwärts gepresst und die damit verbundene Ventilnadel 15 in der das Nadelventil 16 absperrenden Schließlage gehalten wird. Wird der Ablaufkanal 28 mittels des Schaltventils 29 geöffnet, stellt sich im Steuerraum 24 ein gegenüber dem Hochdruck im Hochdruckraum 25 verminderter Druck ein, und der Ventilkolben 12 verschiebt sich zusammen mit der Ventilnadel 15 in Aufwärtsrichtung, das heißt die Ventilnadel 15 wird in deren Offenlage gestellt, so dass Kraftstoff durch die Düse 14 in den Brennraum eingespritzt wird.

Das Schaltventil 29 besitzt einen hülsenförmigen Schließkörper 30, der von einer Schließfeder 34, die als Schraubendruckfeder ausgebildet ist, gegen einen zur Auslassmündung des Ablaufkanals 28 konzentrischen Sitz gespannt wird. Im Beispiel der Fig. 2 ist der Sitz als Planfläche ausgebildet, auf der der hülsenförmige Schließkörper 30 mit einer linienförmigen Ringkante aufsitzt. Der hülsenförmige Schließkörper 30 ist auf einer zur Längsachse L des Injektorkörpers 11 gleichachsigen Führungsstange 31 axial verschiebbar geführt, wobei der Ringspalt zwischen dem Innenumfang des Schließkörpers 30 und dem Außenumfang der Führungsstange 31 als praktisch leckagefreier Drossel- bzw. Dichtspalt ausgebildet ist. Wenn der Schließkörper 30 die in Fig. 2 dargestellte Schließlage einnimmt, wird der innerhalb des Schließkörpers 30 gebildete Ventilraum 32, welcher über den Ablaufkanal 28 mit dem Steuerraum 24 kommuniziert und dann dementsprechend gleichen Fluiddruck wie der Steuerraum 24 aufweist, gegenüber dem Niederdruckraum 26 abgesperrt.

Während der geschlossenen Phase der mit dem Ventilkolben 12 verbundenen Ventilnadel 15, das heißt bei geschlossenem Nadelventil 16, ist das Schaltventil 29 geschlossen, und im Ventilraum 32 sowie im Steuerraum 24 liegen gleiche Fluiddrucke vor. Unmittelbar vor dem Schließzeitpunkt der Ventilnadel 15 sinkt der Druck im Steuerraum 24 wegen des zu diesem Zeitpunkt geringen Drucks unter dem Düsensitz der Ventilnadel 15 und der damit einhergehenden Schließbewegung des Ventilkolbens 12 unter den Hochdruck im Hochdruckanschluss 23 ab. Unmittelbar nach dem Schließen der Ventilnadel 15 kommt es wegen des nun stillstehenden Ventilkolbens 12 zu einem steilen Anstieg des Drucks im Steuerraum 24, wobei der Steuerraumdruck auf den Druck im Hochdruckanschluss 23 ansteigt. Der Druck im Steuerraum 24 und der damit praktisch identische Druck im Ventilraum 32 weisen folglich zum Schließzeitpunkt der Ventilnadel 15 ein ausgeprägtes Minimum auf.

Da der Druck des Steuerraums 24 bei geschlossenem Schließkörper 30 auch im Ventilraum 32 vorliegt, wird die Führungsstange 31 innerhalb des Schließkörpers 30 in dieser Ventilstellung stirnseitig immer vom Steuerraumdruck belastet. Der Ventilraumdruck wird mittels der Führungsstange 31 auf ein kleines Piezoelement als Sensor 33 abgeleitet. Elektrische Anschlüsse des Sensors 33 sind mit von außen zugänglichen Steckkontakten verbunden, so dass eine von dem Sensor 33 bereitgestellte Spannung als Signal S ausgelesen werden kann. Dieses ist abzüglich einer Offset-Spannung proportional zum Druck im Ventilraum 32. Die Offset-Spannung ist dabei zeitlich variabel, unterliegt aber nur deutlich langsameren Schwankungen als dies beim Druck im Ventilraum 32 der Fall ist. Die ausgelesene Spannung wird an ein Steuergerät weitergegeben, welches den Common-Rail-Injektor 10 steuert. Dieses weist einen maschinenlesbaren Datenträger auf, auf dem ein Computerprogramm gespeichert ist, das alle Schritte des erfindungsgemäßen Verfahrens gemäß der vorliegenden Ausführungsform der Erfindung ausführt.

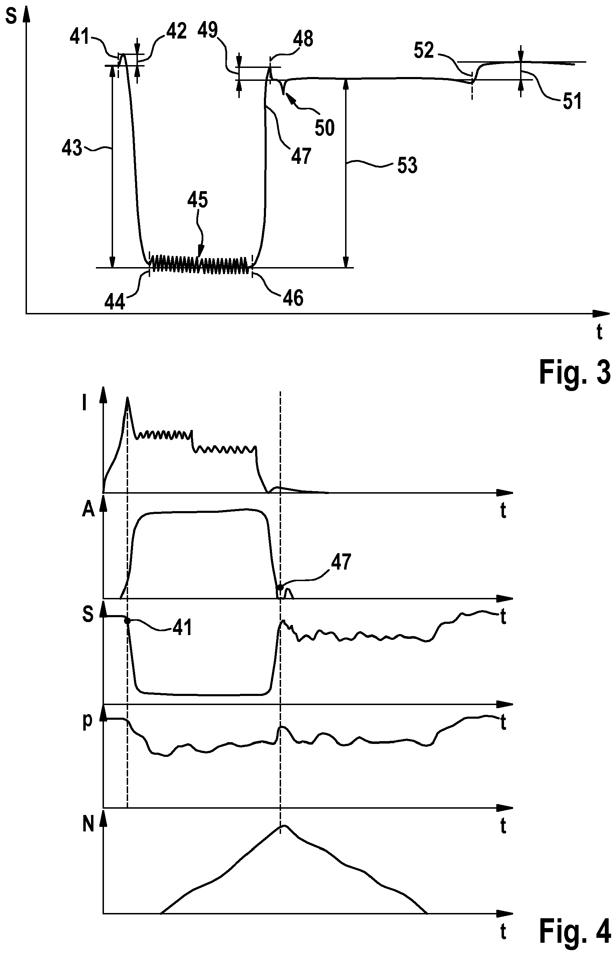

Hierbei erfolgt ein Auswerten einer Änderung des Signals S mit der Zeit t, um mindestens ein Betriebsereignis des Common-Rail-Injektors 10 zu erkennen. Die Änderung des Signals S ist in Fig. 3 dargestellt. Aus einem Anstieg des Signals S ausgehend von einem Anfangswert, wird ein Beginn 41 des Öffnens des Schaltventils 29 erkannt. Aus dem Signalanstieg des Signals S von seinem Anfangswert auf ein lokales Maximum wird eine Kraftüberhöhung 42 beim Beginn des Öffnens des Schaltventils 29 erkannt. Eine solche Kraftüberhöhung 42 erfolgt aufgrund einer Reibung zwischen einem Anker und einem Ankerbolzen in der Ankergruppe 20. Sie ermöglicht einen Rückschluss auf die Viskosität des mittels des Common-Rail-Injektors 10 eingespritzten Kraftstoffs. Aus dem Erreichen eines plateauförmigen lokalen Minimums des Signals S wird ein Ende 44 des Öffnens des Schaltventils 29 erkannt. Es wird also der Schaltventilhub erreicht, was Rückschlüsse auf Ventilfeder-, Magnet- und Störkräfte des Common-Rail-Injektors 10 zulässt. Die Signaldifferenz zwischen dem Anfangswert des Signals S und dem Ende 44 des Öffnens des Schaltventils 29 ist proportional zum Druckverlust 43 im Ventilraum 32 bei geöffnetem Schaltventil 29. Hieraus ist eine Ermittlung des Schaltventilhubes möglich. Während sich das Signal S auf seinem lokalen Minimum befindet, kann ein Kavitationsrauschen 45 bei geöffnetem Schaltventil 29 erkannt werden. Aus dessen Amplitude und Frequenz ist ebenfalls eine Ermittlung des Schaltventilhubes möglich. Sobald das Signal S wieder über sein lokales Minimum ansteigt, wird der Beginn 46 eines Schließens des Schaltventils 29 erkannt. Aus dessen Zeitpunkt kann der am Magnetkopf 19 abfallende Strom berechnet und daraus ein Rückschluss auf die Ventilfederkraft und die Magnetkraft des Common-Rail-Injektors 10 gezogen werden. Ändert sich bei diesem Anstieg des Signals S die Steigung, so wird das Ende 47 des Schließens des Schaltventils 29 erkannt. Hieraus ist ein Rückschluss auf die Ventilfederkraft des Common-Rail-Injektors 10 möglich. Aus dem Zeitpunkt des Erreichens des nächsten lokalen Maximums des Signals S wird der Zeitpunkt einer Nadelumkehr 48 des Nadelventils 15 erkannt. Anschließend fällt das Signal S zunächst auf ein lokales Minimum ab und verbleibt dann für einen gewissen Zeitraum auf einem nahezu konstanten Wert. Der Unterschied zwischen diesem konstanten Wert und dem lokalen Maximum ist proportional zum Drucküberschwinger 49 im Steuerraum 24 bei der Nadelumkehr. Aus dem lokalen Minimum wird auf ein Ventilprellen 50 des Nadelventils 16 geschlossen. Beim Schließen des Nadelventils 16 erfolgt ein Anstieg des Signals S auf einen konstanten Endwert. Hierdurch kann das Nadelschließen 52 erkannt werden. Die Differenz zwischen dem lokalen Minimum des Signals S und seinem Endwert ist proportional zu einer Änderung 51 des Drucks im Steuerraum 24, beim Schließen der Ventilnadel 15. Hieraus kann der Druck während der Bewegung der Ventilnadel 15 und somit der Verkokungsgrad des Common-Rail-Injektors 10 ermittelt werden. Dies kann auch über eine Auswertung der Differenz 53 zwischen der Signalhöhe bei offenem Schaltventil 29 und bei geschlossenem Schaltventil 29 sowie offener Ventilnadel 15 geschehen.

Aus den erkannten Betriebsereignissen und daraus gegebenenfalls hergeleiteten Eigenschaften des Common-Rail-Injektors 10 und des eingespritzten Kraftstoffs wird eine Änderung mindestens einer Betriebsgröße des Common-Rail-Injektors 10 ermittelt. Hierdurch kann die Öffnungsdauer und/oder die Schließdauer sowie der Öffnungs- und/oder Schließzeitpunkt des Schaltventils 29 angepasst werden. Auch die Öffnungsdauer, der Öffnungszeitpunkt und der Schließzeitpunkt des Nadelventils 16 können auf diese Weise geändert werden.

In Fig. 4 ist der zeitliche Verlauf des Signals S dem zeitlichen Verlauf des Stroms I am Magnetkopf 19, des Ankerhub Ader Ankergruppe 20, des Druck p im Steuerraum 24 und des Nadelhubs N der Ventilnadel 15 gegenübergestellt. Es ist zu erkennen, dass bei geschlossenem Schaltventil 29 der Verlauf des Signals S dem Druck p im Steuerraum 24 entspricht. Zwischen dem Beginn 41 des Öffnens des Schaltventils 29 und dem Ende 47 des Schließens des Schaltventils 29 unterscheidet sich der Verlauf des Signals S vom Verlauf des Drucks p im Steuerraum 24. Die erfindungsgemäße Auswertung einer Änderung des Signals S mit der Zeit t ermöglicht deshalb das Erkennen von mehr Betriebsereignissen des Common-Rail-Injektors 10, als dies beispielsweise durch eine Auswertung des Drucks p im Steuerraum möglich wäre.

## Patentansprüche

1. Verfahren zur Regelung eines Common-Rail-Injektors (10) mit den folgenden Schritten:
- Erfassen eines Signals (S) eines Sensors (33), das proportional zu einem Druck in einem Ventilraum (32) des Common-Rail-Injektors (10) ist,
- Auswerten einer Änderung des Signals (S) mit der Zeit (t), um mindestens ein Betriebsereignis des Common-Rail-Injektors (10) zu erkennen, und
- Ändern mindestens einer Betriebsgröße des Common-Rail-Injektors (10) in Abhängigkeit von dem mindestens einen Betriebsereignis, wobei die mindestens eine Betriebsgröße ausgewählt ist aus einer Öffnungsdauer, einer Schließdauer, einem Öffnungszeitpunkt und einem Schließzeitpunkt eines Schaltventils (29) des Common-Rail-Injektors (10) sowie aus einer Öffnungsdauer, aus einem Öffnungszeitpunkt und aus einem Schließzeitpunkt eines Nadelventils (16) des Common-Rail-Injektors (10),
- **dadurch gekennzeichnet, dass** durch Auswertung des Signals (S) eine Eigenschaft eines Kraftstoffs ermittelt wird, welcher mittels des Common-Rail-Injektors (10) eingespritzt wird, wobei es sich bei dieser Eigenschaft des Kraftstoffes um seine Viskosität handelt.

2. Verfahren nach Anspruch 1, **dadurch gekennzeichnet, dass** eine dem Signal (S) überlagerte Schwingung vor dem Auswerten der Änderung des Signals (S) gefiltert wird.

3. Verfahren nach Anspruch 1 oder 2, **dadurch gekennzeichnet, dass** das mindestens eine Betriebsereignis ausgewählt ist aus der Gruppe, bestehend aus einem Beginn (41) eines Öffnens des Schaltventils (29), einer Kraftüberhöhung (42) beim Beginn des Öffnens des Schaltventils (29), einem Ende (44) des Öffnens des Schaltventils (29), einem Druckverlust (43) im Ventilraum (32) bei geöffnetem Schaltventil (29), einem Beginn (46) eines Schließens des Schaltventils (29), einem Ende (47) des Schließens des Schaltventils (29), einer Nadelumkehr (48) des Nadelventils (16), einem Drucküberschwinger (49) im Ventilraum (32) bei der Nadelumkehr, einem Ventilprellen (50) des Nadelventils (16), einer Änderung (51) des Drucks im Ventilraum (32) beim Schließen der Ventilnadel (15) des Nadelventils (16), einer Änderung (53) des Drucks im Ventilraum (32) zwischen den Zuständen geöffnetes und geschlossenes Schaltventil (29) bei geöffneter Ventilnadel (15) des Nadelventils (16) und einem Nadelschließen (52) des Nadelventils (16).

4. Verfahren nach einem der Ansprüche 1 bis 3, **dadurch gekennzeichnet, dass** durch die Auswertung des Signals (S) ferner mindestens eine Eigenschaft des Common-Rail-Injektors (10) ermittelt wird.

5. Verfahren nach Anspruch 4, **dadurch gekennzeichnet, dass** die mindestens eine Eigenschaft des Common-Rail-Injektors (10) ausgewählt ist aus einem Grad seiner Verkokung, einem Zeitpunkt einer Entdrosselung seines Schaltventils (29), einem Grad eines Prellens seines Schaltventils (29) und einem Grad eines Verschleißes seines Schaltventils (29).

6. Computerprogramm, welches derart programmiert ist, dass es ein Verfahren nach einem der Ansprüche 1 bis 5 ausführt, wenn es auf einem Steuergerät eines Common-Rail-Injektors (10) ausgeführt wird, welcher einen Ventilraum (32) aufweist und ein darin vorliegender Druck auf einen Sensor (33) abgeleitet wird.

7. Maschinenlesbares Speichermedium, auf welchem ein Computerprogramm nach Anspruch 6 gespeichert ist.

8. Elektronisches Steuergerät, welches ein maschinenlesbares Speichermedium nach Anspruch 7 umfasst.

## Claims

1. Method for controlling a common-rail injector (10), having the following steps of:
- detecting a signal (S) from a sensor (33) that is proportional to a pressure in a valve chamber (32) of the common-rail injector (10),
- evaluating a change in the signal (S) over time (t) in order to detect at least one operating event of the common-rail injector (10), and
- changing at least one operating variable of the common-rail injector (10) on the basis of the at least one operating event, wherein the at least one operating variable is selected from an opening duration, a closing duration, an opening time and a closing time of a switching valve (29) of the common-rail injector (10) and from an opening duration, an opening time and a closing time of a needle valve (16) of the common-rail injector (10),
- **characterized in that** a property of a fuel injected using the common-rail injector (10) is determined by evaluating the signal (S), wherein this property of the fuel is its viscosity.

2. Method according to Claim 1, **characterized in that** an oscillation superimposed on the signal (S) is filtered before evaluating the change in the signal (S) .

3. Method according to Claim 1 or 2, **characterized in that** the at least one operating event is selected from the group consisting of a beginning (41) of a process of opening the switching valve (29), an excessive force increase (42) at the beginning of the process of opening the switching valve (29), an end (44) of the process of opening the switching valve (29), a pressure loss (43) in the valve chamber (32) when the switching valve (29) is open, a beginning (46) of a process of closing the switching valve (29), an end (47) of the process of closing the switching valve (29), a needle reversal (48) of the needle valve (16), a pressure overshoot (49) in the valve chamber (32) during the needle reversal, valve bounce (50) of the needle valve (16), a change (51) in the pressure in the valve chamber (32) when closing the valve needle (15) of the needle valve (16), a change (53) in the pressure in the valve chamber (32) between the states of open and closed switching valve (29) when the valve needle (15) of the needle valve (16) is open, and needle closing (52) of the needle valve (16).

4. Method according to one of Claims 1 to 3, **characterized in that** at least one property of the common-rail injector (10) is also determined by evaluating the signal (S).

5. Method according to Claim 4, **characterized in that** the at least one property of the common-rail injector (10) is selected from a degree of its coking, a time at which its switching valve (29) is dethrottled, a degree of bounce of its switching valve (29) and a degree of wear of its switching valve (29).

6. Computer program which is programmed to carry out a method according to one of Claims 1 to 5 when it is executed on a control device of a common-rail injector (10) which has a valve chamber (32), and a pressure present therein is discharged to a sensor (33) .

7. Machine-readable storage medium on which a computer program according to Claim 6 is stored.

8. Electronic control device which comprises a machine-readable storage medium according to Claim 7.

## Revendications

1. Procédé de régulation d'un injecteur à rampe commune (10), ledit procédé comprenant les étapes suivantes :
- détecter un signal (S) d'un capteur (33) qui est proportionnel à une pression dans une chambre de soupape (32) de l'injecteur à rampe commune (10),
- évaluer une variation du signal (S) dans le temps (t) afin de détecter au moins un événement de fonctionnement de l'injecteur à rampe commune (10), et
- modifier au moins une grandeur de fonctionnement de l'injecteur à rampe commune (10) en fonction de l'au moins un événement de fonctionnement, l'au moins une grandeur de fonctionnement étant choisie parmi une durée d'ouverture, une durée de fermeture, un instant d'ouverture et un instant de fermeture d'une soupape de commutation (29) de l'injecteur à rampe commune (10) et parmi une durée d'ouverture, un instant d'ouverture et un instant de fermeture d'une soupape à pointeau (16) de l'injecteur à rampe commune (10), **caractérisé en ce qu'**une propriété d'un carburant, qui est injecté au moyen de l'injecteur à rampe commune (10), est déterminée par évaluation du signal (S), cette propriété du carburant étant sa viscosité.

2. Procédé selon la revendication 1, **caractérisé en ce qu'**une oscillation superposée au signal (S) est filtrée avant l'évaluation de la variation du signal (S) .

3. Procédé selon la revendication 1 ou 2, **caractérisé en ce que** l'au moins un événement de fonctionnement est choisi dans le groupe comprenant un début (41) d'une ouverture de la soupape de commutation (29), une augmentation de force (42) au début de l'ouverture de la soupape de commutation (29), une fin (44) de l'ouverture de la soupape de commutation (29), une perte de pression (43) dans la chambre de soupape (32) lorsque la soupape de commutation (29) est ouverte, un début (46) d'une fermeture de la soupape de commutation (29), une fin (47) de la fermeture de la soupape de commutation (29), une inversion de pointeau (48) de la soupape à pointeau (16), un dépassement de pression (49) dans la chambre de soupape (32) lorsque le pointeau est inversé, un rebond de soupape (50) de la soupape à pointeau (16), une variation (51) de la pression dans la chambre de soupape (32) lorsque le pointeau de soupape (15) de la soupape à pointeau (16) se ferme, une variation (53) de la pression dans la chambre de soupape (32) entre les états de soupape de commutation ouverte et fermée (29) lorsque le pointeau de soupape (15) de la soupape à pointeau est ouvert (16) et une fermeture de pointeau (52) de la soupape à pointeau (16).

4. Procédé selon l'une des revendications 1 à 3, **caractérisé en ce qu'**en outre au moins une propriété de l'injecteur à rampe commune (10) est déterminée par évaluation du signal (S).

5. Procédé selon la revendication 4, **caractérisé en ce que** l'au moins une propriété de l'injecteur à rampe commune (10) est choisie parmi un degré de cokéfaction de celui-ci, un instant de suppression d'étranglement de sa soupape de commutation (29), un degré de rebond de sa soupape de commutation (29) et un degré d'usure de sa soupape de commutation (29).

6. Logiciel qui est programmé de manière à mettre en œuvre un procédé selon l'une des revendications 1 à 5 lorsqu'il est exécuté sur une unité de commande d'un injecteur à rampe commune (10) qui comporte une chambre à de soupape (32) et à déduire une pression, réglant à l'intérieur de celle-ci, à partir d'un capteur (33).

7. Support de stockage lisible par machine sur lequel un logiciel selon la revendication 6 est stocké.

8. Unité de commande électronique qui comprend un support de stockage lisible par machine selon la revendication 7.
